# EUROPEAN PATENT APPLICATION

(11) **EP 3 439 157 A1**
(43) Date of publication of application: **06.02.2019**
(21) Application number: 17775355.5
(22) Date of filing: 30.03.2017
(51) Int. Cl.: H02K 41/03, H02K 15/14, H02K 21/14

(54) **LINEAR AND ROTARY DRIVE DEVICE AND LINEAR AND ROTARY DRIVE DEVICE MANUFACTURING METHOD**

(30) Priority: 30.03.2016 JP 2016067596
(71) Applicant: Nidec Corporation, Kyoto-shi, Kyoto 601-8205 (JP)
(72) Inventor: KUROSAWA,Hironori, Suwa-gun Nagano 393-8511 (JP)
(74) Representative: Zimmermann, Tankred Klaus
(86) International application number: PCT/JP2017/013147
(87) International publication number: WO 2017/170821

(57) **Abstract**

Provided is a linear-motion rotation drive device in which an axis of an output shaft, a rotational center line of a rotor of a rotation drive unit, and a linear-motion direction of the output shaft can be coincident with each other. A linear-motion rotation drive device 1 includes an output shaft 2, a rotation drive unit 21 for rotating the output shaft 2, a linear-motion drive unit 22 which linearly moves the output shaft 2, and a ball spline bearing 36 coaxially supporting the output shaft 2 to be movable in an axial direction X and configured to transmit rotation of the rotation drive unit 21 to the output shaft 2. The rotation drive unit 21 is a rotary motor and includes an annular rotor 41 having a larger inner diameter dimension than the ball spline bearing 36, and a pair of rotor bearings 42 and 43 holding the rotor 41 to be rotatable in a direction θ around the axis at positions spaced apart in the axial direction X. The ball spline bearing 36 is fixed to the rotor 41 in a state of having a radial gap between the ball spline bearing 36 and the rotor 41 on an inner circumferential side of the rotor 41, and the ball spline bearing 36 and the rotor 41 rotate integrally.

## Description

### [Technical Field]

The present invention relates to a linear-motion rotation drive device for linearly moving and rotating an output shaft.

### [Background Art]

A linear-motion rotation drive device is described in Patent Literature 1. The linear-motion rotation drive device of the literature includes a drive unit which linearly moves and rotates an output shaft. The drive unit includes a magnet fixed to the output shaft, a driving coil for linear-motion drive disposed on an outer circumferential side of the magnet, and a driving coil for rotation drive disposed on an outer circumferential side of the driving coil for linear-motion driving. The linear-motion rotation drive device moves the output shaft in an axial direction when power is supplied to the coil for linear-motion drive. In addition, the linear-motion rotation drive device rotates the output shaft around the axis when power is supplied to the coil for rotation drive.

### [Citation List]

### [Patent Literature]

[Patent Literature 1] Japanese Patent Application Laid-Open No. 2012-34508

### [Summary of Invention]

### [Technical Problem]

In a linear-motion rotation drive device, when an axis of an output shaft, a rotational center line when the output shaft is rotated, and a linear-motion direction of the output shaft do not coincide, there is a problem in that vibrations occur in the output shaft when the output shaft is driven.

The present invention has been made in view of such a problem and an objective of the present invention is to provide a linear-motion rotation drive device in which an axis of an output shaft, a rotational center line of the output shaft, and a linear-motion direction of the output shaft can be coincident with each other.

### [Solution to Problem]

In order to solve a problem described above, a linear-motion rotation drive device of the present invention includes an output shaft, a linear-motion drive unit which moves the output shaft in an axial direction, a rotation drive unit which rotates the output shaft around an axis, and an output shaft bearing coaxially supporting the output shaft to be movable in the axial direction and configured to transmit rotation of the rotation drive unit to the output shaft, in which the rotation drive unit is a rotary motor and includes an annular rotor of which an inner diameter dimension is larger than an outer diameter dimension of the output shaft bearing, and a pair of rotor bearings holding the rotor to be rotatable around the axis at positions spaced apart in the axial direction, the output shaft bearing is fixed to the rotor in a state in which there is a gap in a radial direction between the output shaft bearing and the rotor on an inner circumferential side of the rotor, and the output shaft bearing and the rotor rotate integrally.

In the present invention, the output shaft bearing supporting the output shaft to be movable in the axial direction coaxially supports the output shaft. Therefore, an axis and a linear-motion direction of the output shaft coincide with an axis of the output shaft bearing. Also, the output shaft bearing is disposed on an inner circumferential side of the annular rotor of the rotation drive unit for rotating the output shaft, and is fixed to the rotor in a state in which there is a radial gap between the output shaft bearing and the rotor. Therefore, when the output shaft bearing and the rotor are fixed, the output shaft bearing is moved in a radial direction on the inner circumferential side of the rotor so that a rotational center line of the rotor and the axis of the output shaft bearing (the axis of the output shaft and a movement direction) can be made to coincide with each other. Thereby, since the axis of the output shaft, the rotational center line of the output shaft, and the linear-motion direction of the output shaft can be made to coincide with each other, vibrations in the output shaft can be prevented or inhibited from occurring when the output shaft is driven.

In the present invention, in order to fix the output shaft bearing and the rotor in a state in which the radial gap is formed, the output shaft bearing can be fixed to the rotor by an adhesive interposed between the output shaft bearing and the rotor in the radial direction.

In this case, it is preferable that the rotor includes an adhesive injection hole penetrating in the radial direction. In this way, it becomes easier to interpose an adhesive between the output shaft bearing and the rotor.

In the present invention, it is preferable that the gap be formed between the output shaft bearing and the rotor over the entire circumference around the axis. In this way, when the rotational center line of the rotor is made to coincide with the axis of the output shaft and the linear-motion direction of the output shaft held by the output shaft bearing, since the output shaft bearing and the rotor do not interfere with each other, they can be accurately made to coincide with each other.

In the present invention, it is preferable that the pair of rotor bearings and the output shaft be coaxial. The rotational center line of the rotor is defined by a central axis of the pair of rotor bearings. Therefore, when the pair of rotor bearings and the output shaft are coaxially disposed, the rotational center line of the rotor can be made to coincide with the axis of the output shaft and the linear-motion direction of the output shaft.

In the present invention, it is preferable that a case which accommodates the linear-motion drive unit and the rotation drive unit be provided, that the linear-motion drive unit and the rotation drive unit be arranged in the axial direction, and that the case include a case side bearing which supports the output shaft to be rotatable around the axis and movable in the axial direction on the linear-motion drive unit side opposite to the rotation drive unit in the axial direction. In this way, since the case side bearing for supporting the output shaft is provided at a position spaced apart from the output shaft bearing in the axial direction, it is possible to prevent or suppress the output shaft from vibrating when the output shaft is driven.

Next, in a method of manufacturing the above-described linear-motion rotation drive device, the present invention includes a holding step of holding the output shaft coaxially with the output shaft bearing, and a fixing step of fixing the output shaft bearing to a cylindrical member constituting the rotor, wherein, in the fixing step, the output shaft is caused to penetrate through the cylindrical member so that the output shaft bearing is disposed on an inner circumferential side of the cylindrical member, and the output shaft bearing is fixed to the cylindrical member with an adhesive by interposing the adhesive between the output shaft bearing and the cylindrical member and causing a rotational center line of the cylindrical member and an axis of the output shaft to coincide with each other.

In the present invention, the output shaft is coaxially held by the output shaft bearing that supports the output shaft to be movable in the axial direction. Therefore, the axis and the linear-motion direction of the output shaft coincide with the axis of the output shaft bearing. Further, the output shaft bearing is disposed on the inner circumferential side of the annular rotor of the rotation drive unit for rotating the output shaft, and after the rotational center line of the rotor is made to coincide with the axis of the output shaft, the output shaft bearing is fixed with an adhesive. Therefore, the axis of the output shaft, the rotational center line of the output shaft, and the linear-motion direction of the output shaft can be made to coincide with each other.

In the present invention, in the fixing step, it is preferable that the pair of rotor bearings be mounted on the cylindrical member and the pair of rotor bearings and the output shaft be held by a jig so that a rotational center line of the pair of rotor bearings and an axis of the output shaft are made to coincide with each other. The rotational center line of the rotor is defined by the pair of rotor bearings. Therefore, when the pair of rotor bearings and the output shaft are held by the jig and positioned in a coaxial state, the rotational center line of the rotor and the axis of the output shaft can be made to coincide with each other.

In the present invention, it is preferable that an adhesive injection hole penetrating in a radial direction be formed in the cylindrical member in advance, and when an adhesive is interposed between the output shaft bearing and the cylindrical member in the fixing step, that the adhesive be injected to the inner circumferential side of the cylindrical member via the adhesive injection hole. In this way, it becomes easier to fix the output shaft bearing and the rotor with an adhesive.

### [Advantageous Effects of Invention]

According to the present invention, in the linear-motion rotation drive device, the axis of the output shaft, the rotational center line of the output shaft, and the linear-motion direction of the output shaft can be made to coincide with each other. Therefore, vibrations in the output shaft can be prevented or inhibited from occurring when the output shaft is driven.

### [Brief Description of Drawings]

Fig. 1 is an external perspective view of a linear-motion rotation drive device of the present invention.
Fig. 2 is a cross-sectional view of the linear-motion rotation drive device of Fig. 1 taken along a plane including an axis.
Fig. 3 is a perspective view of an output shaft and a ball spline bearing.
Fig. 4 is an enlarged partial cross-sectional view illustrating a rotation drive unit.
Fig. 5 is a perspective view of the output shaft, the ball spline bearing, a cylindrical member, and a pair of rotor bearings.
Fig. 6 is an enlarged partial cross-sectional view illustrating the linear-motion drive unit.
Figs. 7a, 7b and 7c are explanatory views of a stroke of the output shaft.
Fig. 8 is a perspective view of a jig used in a manufacturing process of a linear-motion rotation drive device.
Figs. 9a and 9b are perspective views of the jig divided into three.
Fig. 10 is a cross-sectional view of the jig holding the output shaft, the cylindrical member, and the pair of rotor bearings.

### [Description of Embodiments]

Hereinafter, a linear-motion rotation drive device of an embodiment of the present invention will be described with reference to the drawings.

### (Linear-motion rotation drive device)

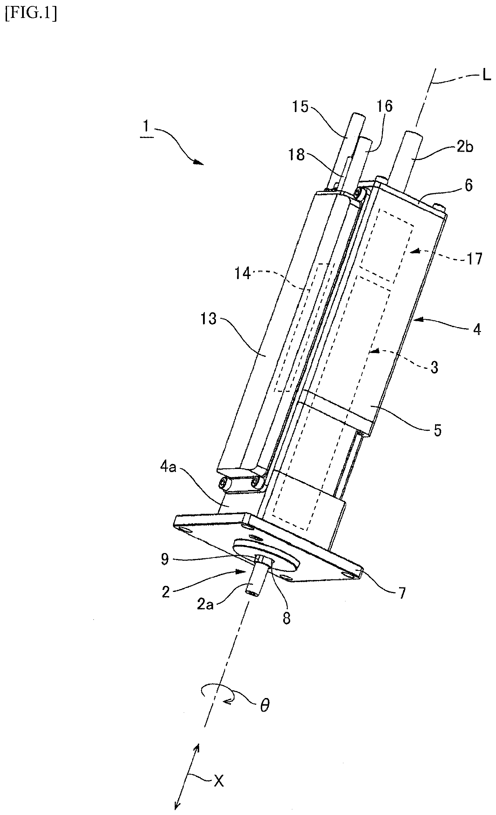

Fig. 1 is an external perspective view of a linear-motion rotation drive device including a linear-motion rotation detector of the present invention. As illustrated in Fig. 1, a linear-motion rotation drive device 1 includes an output shaft 2, an output shaft drive mechanism 3 which drives the output shaft 2, and a case 4 which accommodates the output shaft drive mechanism 3. The case 4 includes a rectangular cylindrical case body 5 extending in an axial direction X along an axis L of the output shaft 2. The case body 5 has a rectangular shape when viewed from the axial direction X. A flange 7 having a rectangular plate shape is fixed to one end of the case body 5. The flange 7 extends in a direction perpendicular to the axis L at the other end of the case body 5. Also, a rectangular plate 6 is fixed to the other end portion of the case body 5.

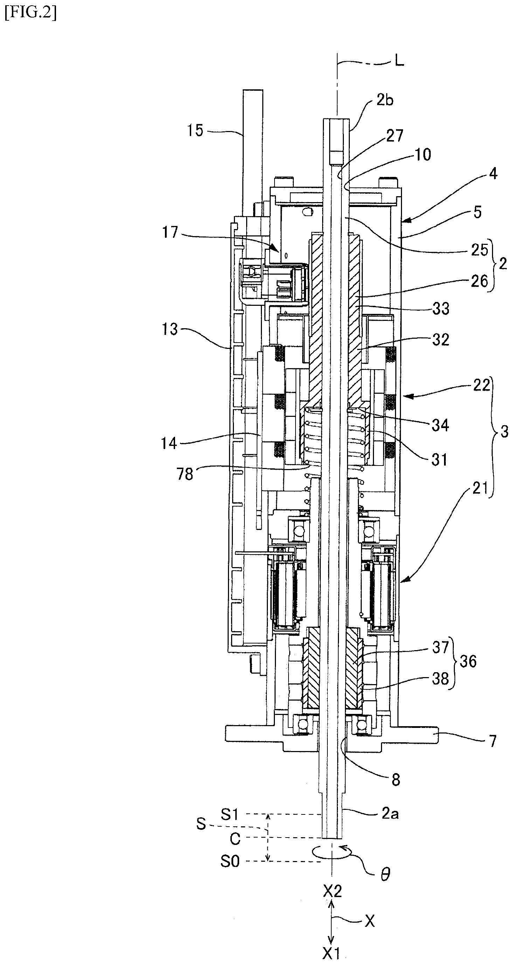

At a center of the flange 7, an output-side opening 8 is provided. An end portion 2a of the output shaft 2 on an output side protrudes from the output-side opening 8 to the outside of the case 4. A spline groove 9 is provided on the output shaft 2. An opposite output-side opening 10 is provided at a center of the rectangular plate 6 (see Fig. 2). An end portion 2b of the output shaft 2 on an opposite output side protrudes from the opposite output-side opening 10 to the outside of the case 4. The opposite output-side opening 10 is a bearing which rotatably supports the output shaft 2 in a direction θ around the axis and supports the output shaft 2 to be linearly movable in the axial direction X on an inner circumferential surface thereof.

A cover 13 is attached to one side surface 4a among four side surfaces of the case body 5 in the direction θ around the axis. The cover 13 extends long in the axial direction X. A circuit board 14 for controlling power supply to the output shaft drive mechanism 3 is accommodated in a space on an inner side of the cover 13 partitioned between the cover 13 and the case body 5 (see Fig. 2). Cables 15 and 16 for supplying power to the circuit board 14 are connected to the circuit board 14. Also, a position detection mechanism 17 which detects a position of the output shaft 2 is accommodated in the case 4, and a cable 18 for taking out a detection signal output from the position detection mechanism 17 to the outside is connected to the position detection mechanism 17. The cables 15, 16, and 18 are drawn out through a space on the inner side of the cover 13 via a cable draw-out port (not illustrated) provided at an end portion of the cover 13 on a side opposite to the flange 7 .

### (Internal configuration)

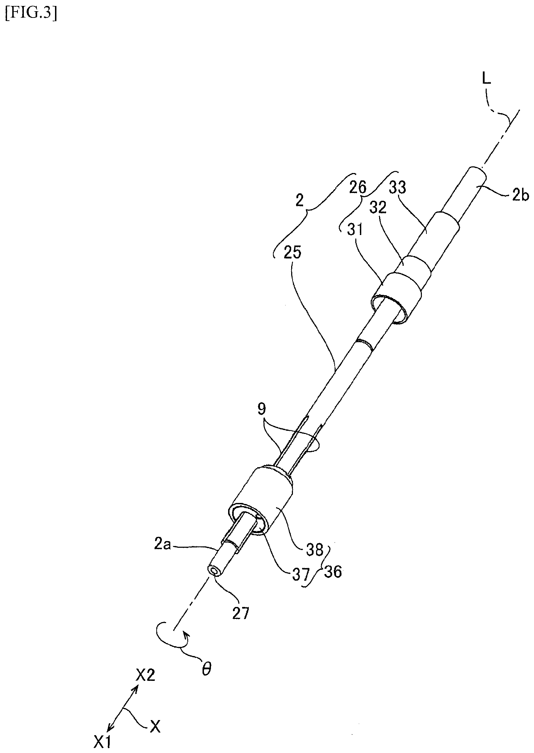

Fig. 2 is a longitudinal sectional view of the linear-motion rotation drive device 1 of Fig. 1 taken along a plane including the axis L. In Fig. 2, the linear-motion rotation drive device 1 assumes a reference posture in which the end portion 2a on the output side of the output shaft 2 is directed downward and the axis L of the output shaft 2 is in a vertical direction. In the following description, up and down in the reference posture illustrated in Fig. 1 will be described as a vertical direction (axial direction X) of the linear-motion rotation drive device 1. Also, in the following description, when the linear-motion rotation drive device 1 assumes the reference posture, a lower side in the vertical direction is defined as X1 and an upper side thereof is defined as X2. Fig. 3 is a perspective view of the output shaft 2 and a ball spline bearing coaxially attached to the output shaft 2.

As illustrated in Fig. 2, in the case 4, the output shaft drive mechanism 3 is positioned on the lower side X1 of the position detection mechanism 17. The output shaft drive mechanism 3 includes a rotation drive unit 21 for rotating the output shaft 2 in the direction θ around the axis, and a linear-motion drive unit 22 for moving the output shaft 2 in the axial direction X. The rotation drive unit 21 is positioned on the lower side X1 of the linear-motion drive unit 22 in the axial direction X. The rotation drive unit 21 is configured to be coaxial with the linear-motion drive unit 22.

As illustrated in Figs. 2 and 3, the output shaft 2 includes an output shaft body 25 penetrating and extending through the rotation drive unit 21 and the linear-motion drive unit 22, and a cylindrical fixing member 26 coaxially fixed to an upper side portion of the output shaft body 25. As illustrated in Fig. 2, a lower end portion of the output shaft body 25 (output-side end portion 2a) protrudes toward the lower side X1 from the output-side opening 8 of the case 4, and an upper end portion of the output shaft body 25 (opposite output-side end portion 2b) protrudes toward the upper side X2 from the case 4 via the opposite output-side opening 10 (bearing). A through hole 27 penetrating in the axial direction X is provided in the output shaft body 25.

As illustrated in Fig. 3, the fixing member 26 includes a large-diameter cylindrical portion 31, an intermediate-diameter cylindrical portion 32 coaxial with the large-diameter cylindrical portion 31 and having a smaller outer diameter dimension than the large-diameter cylindrical portion 31, and a small-diameter cylindrical portion 33 having a smaller outer diameter dimension than the intermediate-diameter cylindrical portion 32 in this order from the lower side X1 toward the upper side X2. A center hole of the large-diameter cylindrical portion 31 is larger than a center hole of each of the intermediate-diameter cylindrical portion 32 and the small-diameter cylindrical portion 33. As illustrated in Fig. 2, an annular end surface portion 34 is provided between the center hole of the large-diameter cylindrical portion 31 and the center hole of the intermediate-diameter cylindrical portion 32. The annular end surface portion 34 is an annular end surface facing the lower side X1. In the fixing member 26, the output shaft body 25 is press-fitted into the center hole of the intermediate-diameter cylindrical portion 32 and the small-diameter cylindrical portion 33, and thereby the fixing member 26 is fixed to the output shaft body 25.

A ball spline bearing (output shaft bearing) 36 which is coaxial with the output shaft 2 is attached to a lower portion of the output shaft 2. Balls (not illustrated) constituting the ball spline bearing 36 are rollably inserted into the spline groove 9 provided on the lower portion of the output shaft 2. The ball spline bearing 36 coaxially supports the output shaft 2 to be movable in the axial direction X, and transmits rotation of the rotation drive unit 21 to the output shaft 2. The ball spline bearing 36 includes a cylindrical bearing body 37 and a cylindrical sleeve 38 integrated with the bearing body 37 by shrink fitting. A contour shape of the ball spline bearing 36 is circular when viewed from the axial direction X.

### (Rotation drive unit)

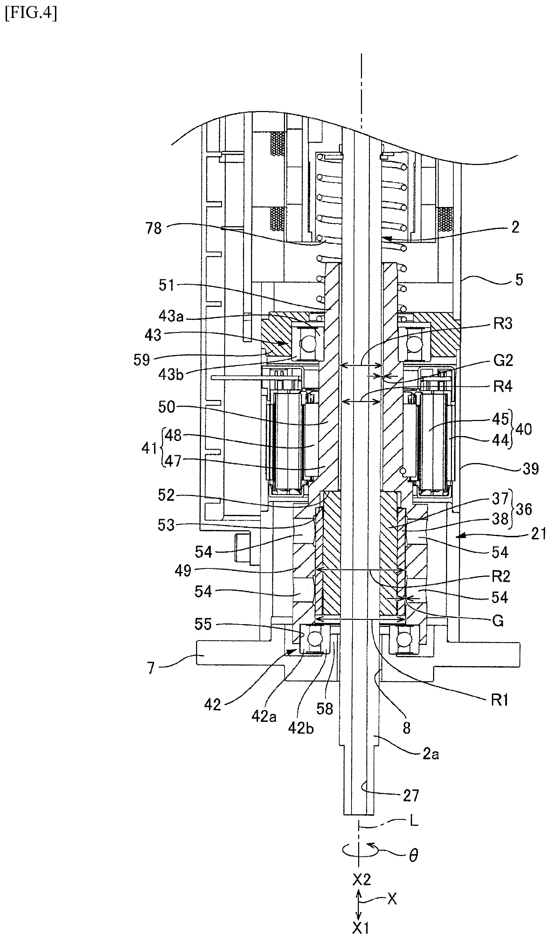

Fig. 4 is an enlarged partial cross-sectional view illustrating the rotation drive unit 21. The rotation drive unit 21 is a rotary motor. As illustrated in Fig. 4, the rotation drive unit 21 includes a motor case 39 having a rectangular frame shape, an annular stator 40 fixed inside the motor case 39, an annular rotor 41 disposed on an inner circumferential side of the stator 40, and a pair of bearings (rotor bearings) 42 and 43 supporting the rotor 41 to be rotatable. The pair of bearings 42 and 43 are constituted by a first bearing 42 which supports a lower end portion of the rotor 41 and a second bearing 43 which supports an upper portion of the rotor 41. The motor case 39 constitutes a portion of the case body 5. The stator 40 includes a stator core 44 having a plurality of salient poles (not illustrated) protruding toward the inside in a radial direction and a plurality of rotation drive coils 45 wound around the salient poles of the stator core 44.

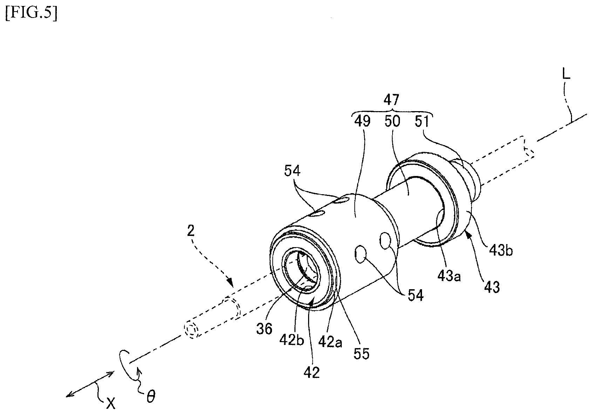

The rotor 41 includes a cylindrical member 47 and a permanent magnet 48. Fig. 5 is a perspective view of the output shaft 2, the ball spline bearing 36, the cylindrical member 47, and the pair of bearings 42 and 43. In Fig. 5, the output shaft 2 is illustrated by a dotted line. The cylindrical member 47 includes a large-diameter cylindrical portion 49, an intermediate-diameter cylindrical portion 50 which is coaxial with the large-diameter cylindrical portion 49 and has an outer diameter dimension smaller than that of the large-diameter cylindrical portion 49, and a small-diameter cylindrical portion 51 which is coaxial with the intermediate-diameter cylindrical portion 50 and has an outer diameter dimension smaller than that of the intermediate-diameter cylindrical portion 50. A center hole of the large-diameter cylindrical portion 49 is larger than a center hole of the intermediate-diameter cylindrical portion 50. Accordingly, as illustrated in FIG. 4, an annular end surface portion 52 is provided between the center hole of the large-diameter cylindrical portion 49 and the center hole of the intermediate-diameter cylindrical portion 50. The annular end surface portion 52 is an annular end surface facing the lower side X1. Also, a step portion 53 having an annular surface facing the lower side X1 is provided on an inner circumferential surface of the large-diameter cylindrical portion 49. Further, a plurality of adhesive injection holes 54 penetrating in a radial direction are provided in the large-diameter cylindrical portion 49. In this example, four pairs of adhesive injection holes 54 in which each pair of two adhesive injection holes 54 are arranged in the axial direction X are provided at equiangular intervals in the direction θ around the axis.

The output shaft 2 penetrates through a center hole of the rotor 41. The ball spline bearing 36 attached to the output shaft 2 is positioned on an inner circumferential side of the large-diameter cylindrical portion 49. The sleeve 38 of the ball spline bearing 36 abuts against the step portion 53 on the inner circumferential surface of the large-diameter cylindrical portion 49 from the lower side X1 in the axial direction X.

The ball spline bearing 36 is fixed to the large-diameter cylindrical portion 49 by an adhesive (not illustrated) injected from an outer circumferential side to an inner circumferential side of the rotor 41 via the adhesive injection holes 54. Thereby, rotation of the rotor 41 is transmitted to the output shaft 2 through the ball spline bearing 36. Accordingly, the output shaft 2 rotates integrally with the rotor 41.

As illustrated in Fig. 4, an inner diameter dimension R1 of the center hole of the large-diameter cylindrical portion 49 of the rotor 41 is larger than an outer diameter dimension R2 of the ball spline bearing 36. Accordingly, the ball spline bearing 36 is fixed to the rotor 41 by an adhesive interposed between the ball spline bearing 36 and the rotor 41 in a state in which a radial gap G between the ball spline bearing 36 and the rotor 41 (the large-diameter cylindrical portion 49) is provided on the inner circumferential side of the large-diameter cylindrical portion 49.

In this example, the gap G is formed over the entire circumference in the direction θ around the axis between the ball spline bearing 36 and an inner circumferential surface of the center hole of the large-diameter cylindrical portion 49. Further, an inner diameter dimension R3 of the center hole of the intermediate-diameter cylindrical portion 50 and the small-diameter cylindrical portion 51 of the rotor 41 is larger than an outer diameter dimension R4 of the output shaft body 25. Accordingly, also on an inner circumferential side of the intermediate-diameter cylindrical portion 50 and the small-diameter cylindrical portion 51, a gap G2 is formed over the entire circumference in a radial direction between the output shaft 2 (the output shaft body 25) and the rotor 41 (the intermediate-diameter cylindrical portion 50 and the small-diameter cylindrical portion 51).

The pair of bearings 42 and 43 are disposed at positions spaced apart from each other in the axial direction X. Each of the bearings 42 and 43 is a ball bearing. Among the pair of bearings 42 and 43, an outer ring 42a of the first bearing 42 positioned on the lower side X1 is held at a lower end portion of the large-diameter cylindrical portion 49 of the rotor 41. More specifically, a bearing mounting portion 55 in which an inner circumferential side portion of the large-diameter cylindrical portion 49 is cut out from a lower end thereof in a certain width in the axial direction X is provided at the lower end portion of the large-diameter cylindrical portion 49 of the rotor 41. The outer ring 42a of the first bearing 42 is inserted into the bearing mounting portion 55 from the lower side X1 and is fitted to the bearing mounting portion 55. In a state in which the first bearing 42 is mounted on the bearing mounting portion 55, the rotor 41 and the first bearing 42 are coaxially positioned.

An inner ring 42b of the first bearing 42 is attached to a cylindrical first bearing fitting portion 58 protruding into the case body 5 in the axial direction X from an outer circumferential side surrounding the output-side opening 8 of the flange 7. In a state in which the first bearing 42 is attached to the first bearing fitting portion 58, the inner ring 42b of the first bearing 42 is fitted to the first bearing fitting portion 58, and an inner circumferential surface of the first bearing 42 (an inner circumferential surface of the inner ring 42b) and an outer circumferential surface of the first bearing fitting portion 58 are in close contact with each other.

The second bearing 43 positioned on the upper side X2 of the first bearing 42 is fixed to an outer circumferential side of the small-diameter cylindrical portion 51 of the rotor 41. That is, the second bearing 43 is fixed to the small-diameter cylindrical portion 51 by bringing an inner circumferential surface of the inner ring 43a of the second bearing 43 into contact with an outer circumferential surface of the small-diameter cylindrical portion 51. The second bearing 43 is in contact with an upward annular surface provided between the small-diameter cylindrical portion 51 and the intermediate-diameter cylindrical portion 50 from the upper side X2 on an outer circumferential surface of the rotor 41. In a state in which the second bearing 43 is mounted on the small-diameter cylindrical portion 51, the rotor 41 and the second bearing 43 are coaxially positioned. Accordingly, the rotor 41, the first bearing 42, and the second bearing 43 are coaxial.

Here, as illustrated in Fig. 4, the case 4 includes a second bearing fitting portion 59 at a position facing a lower end portion of the small-diameter cylindrical portion 51 in a radial direction in the case body 5. The second bearing fitting portion 59 is an annular protrusion protruding from four side plates of the case body 5 to the inner circumferential side and holds the second bearing 43 on an annular inner circumferential surface thereof. In a state in which the second bearing 43 is held by the second bearing fitting portion 59, the outer ring 43b of the second bearing 43 is fitted to the second bearing fitting portion 59, and an outer circumferential surface of the outer ring 43b and an annular inner circumferential surface of the second bearing fitting portion 59 are in close contact with each other.

The permanent magnet 48 has a cylindrical shape and is fixed to an outer circumferential surface of the intermediate-diameter cylindrical portion 50. The permanent magnet 48 has a plurality of N poles and S poles alternately magnetized in the direction θ (circumferential direction) around the axis. In this example, a cylindrical yoke (not illustrated) is mounted on the intermediate-diameter cylindrical portion 50, and the permanent magnet 48 is fixed to the intermediate-diameter cylindrical portion 50 with the yoke interposed therebetween. The permanent magnet 48 faces salient poles of the stator core 44 around which the rotation drive coils 45 are wound with a small clearance therebetween in the radial direction.

Here, the rotor 41 is rotated in the direction θ around the axis when power is supplied to the rotation drive coils 45. The rotation of the rotor 41 is transmitted to the output shaft 2 via the ball spline bearing 36. Therefore, the output shaft 2 rotates integrally with the rotor 41.

### (Linear-motion drive unit)

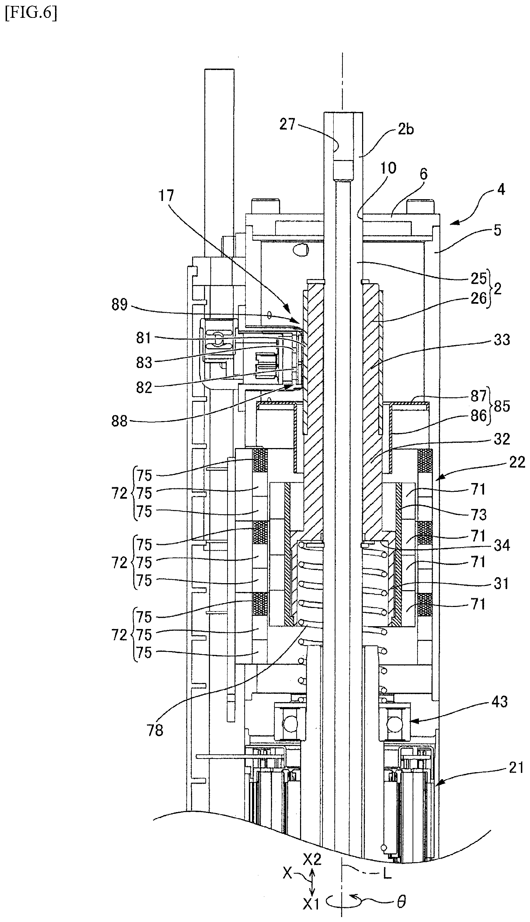

Fig. 6 is an enlarged partial cross-sectional view illustrating the linear-motion drive unit 22 and the position detection mechanism 17. The linear-motion drive unit 22 is a linear motor. The linear-motion drive unit 22 includes a plurality of permanent magnets 71 fixed to the output shaft 2 and a plurality of linear-motion drive coil units 72 arranged in the axial direction X while surrounding the output shaft 2 from an outer circumference side. The plurality of permanent magnets 71 are fixed to an outer circumferential surface of a cylindrical yoke 73 mounted on an outer circumferential surface of the large-diameter cylindrical portion 31 of the fixing member 26. The yoke 73 has a constant diameter dimension. Further, a length dimension of the yoke 73 in the axial direction X is longer than a length dimension of the large-diameter cylindrical portion 31, and a gap formed between an upper end side portion of the yoke 73 and an outer circumferential surface of the intermediate-diameter cylindrical portion 32 extends in the axial direction X on an outer circumferential side of the intermediate-diameter cylindrical portion 32 of the fixing member 26.

Each of the permanent magnets 71 is annular, and an N pole and an S pole are magnetized in the axial direction X. The plurality of permanent magnets 71 are arranged such that two adjacent permanent magnets 71 face the same pole each other in the axial direction X. In this example, four permanent magnets 71 are fixed to the output shaft 2 with the yoke 73 interposed therebetween.

The linear-motion drive coil units 72 are fixed to an inner wall surface of the case body 5. Each of the linear-motion drive coil units 72 is formed into a cylindrical shape by integrally solidifying three linear-motion drive coils 75 coaxially arranged in the axial direction X with a resin. Therefore, the linear-motion drive unit 22 includes nine linear-motion drive coils 75. A length dimension of each linear-motion drive coil unit 72 in the axial direction X is about twice a length dimension of each permanent magnet 71 in the axial direction X.

Here, the linear-motion drive unit 22 is a three-phase linear motor, and the three linear-motion drive coils 75 constituting each linear drive coil unit 72 function as a U-phase drive coil , a V-phase drive coil, and a W-phase drive coil respectively when the linear motor is driven.

A coil spring 78 as an elastic member is disposed between the second bearing 43 of the rotation drive unit 21 and the fixing member 26 of the output shaft 2. The coil spring 78 surrounds the output shaft body 25 from an outer circumferential side with the output shaft body 25 penetrating therethrough, and an end thereof on the lower side X1 (an end on the rotation drive unit 21 side) is placed on an upper surface of the second bearing 43. Therefore, the coil spring 78 disposed on an outer circumferential side of the output shaft 2 does not interfere with the rotor 41 of the rotation drive unit 21. Further, an upper end portion of the coil spring 78 is inserted into an inner circumferential side of the large-diameter cylindrical portion 31 of the fixing member 26, and an end thereof on the upper side X2 abuts against the annular end surface portion 34 of the fixing member 26.

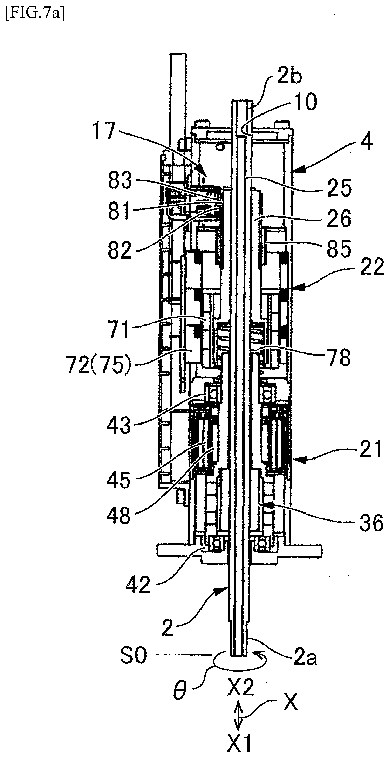

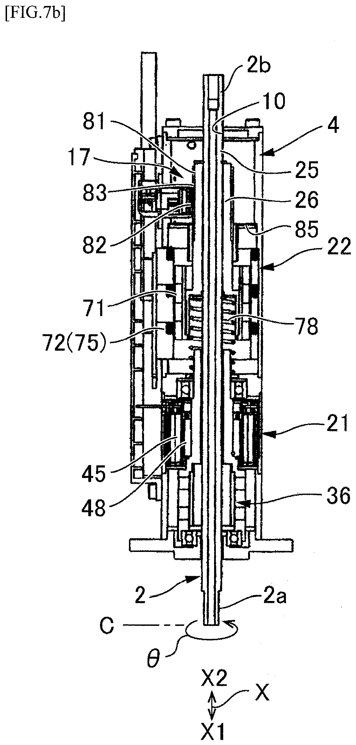

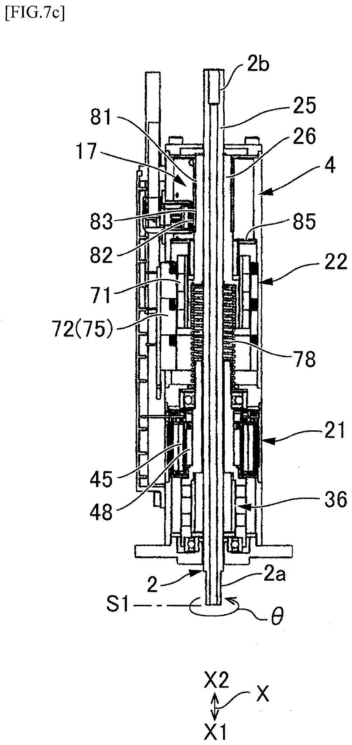

Here, the state illustrated in Fig. 2 is a state in which the linear-motion rotation drive device 1 assumes the reference posture and power supply to the linear-motion rotation drive device 1 (power supply to the linear-motion drive unit 22) is not performed. In such a state, the coil spring 78 supports the output shaft 2 at a central position C at a center between a lower end position S0 and an upper end position S1 of a stroke S, in which the output shaft 2 is moved by the linear-motion drive unit 22 (see Fig. 7b). Also, in a state in which the coil spring 78 supports the output shaft 2 at the central position C, the coil spring 78 is compressed due to a weight of the output shaft 2. Further, even when the output shaft 2 is positioned at the upper end position S1 of the stroke S (an end on the opposite output-side, see Fig. 7 c), the coil spring 78 is compressed more than a natural length thereof.

The linear-motion drive unit 22 moves the output shaft 2 in the axial direction X by moving the linear-motion drive coils 75 to which power is supplied in the axial direction X. Also, the linear-motion drive unit 22 maintains the output shaft 2 that has moved in the axial direction X at the linearly moved position by maintaining the state of supplying power to the linear-motion drive coils 75. Here, when the linear-motion drive unit 22 moves the output shaft 2 to a position on the lower side X1 (output-side) below the central position C, the linear-motion drive unit 22 moves the output shaft 2 against a biasing force of the coil spring 78. On the other hand, when the linear-motion drive unit 22 moves the output shaft 2 to the upper side X2 (opposite output-side) above the center position C, the linear-motion drive unit 22 moves the output shaft 2 while utilizing the biasing force of the coil spring 78.

### (Linear-motion rotation detection mechanism)

The position detection mechanism 17 detects a magnetic field of the position detection permanent magnet 81 fixed to the output shaft 2 by a rotational position detection magnetic sensor 82 and a linear-motion position detection magnetic sensor 83 which are fixed to the case 4 side. The position detection permanent magnet 81 is annular and is fixed to an outer circumferential surface of the small-diameter cylindrical portion 33 in the fixing member 26 of the output shaft 2. Therefore, the position detection permanent magnet 81 moves integrally with the output shaft 2 in the axial direction X and rotate integrally with the output shaft 2 in the direction θ around the axis. The position detection permanent magnet 81 and the rotational position detection magnetic sensor 82 constitute a rotational position detector 88. A rotational position of the output shaft 2 is acquired on the basis of a detection signal output from the rotational position detection magnetic sensor 82. The position detection permanent magnet 81 and the linear-motion position detection magnetic sensor 83 constitute a linear-motion detection position detector 89. A linear-motion position of the output shaft 2 is acquired on the basis of a detection signal output from the linear-motion position detection magnetic sensor 83.

Here, a shield member 85 is disposed between the linear-motion position detection magnetic sensor 83 and rotational position detection magnetic sensor 82, and the linear-motion drive unit 22. The shield member 85 includes a cylindrical portion 86 positioned between the intermediate-diameter cylindrical portion 32 of the output shaft 2 and the yoke 73 in the radial direction, and an annular plate portion 87 extending from an upper end edge of the cylindrical portion 86 to an outer circumferential side and reaching the inner wall surface of the case body 5. When the output shaft 2 moves to the upper side X2 (opposite output-side), the cylindrical portion 86 enters between the intermediate-diameter cylindrical portion 32 of the output shaft 2 and the yoke 73. The shield member 85 prevents or inhibits a magnetic field of the permanent magnet 71 of the linear-motion drive unit 22 from affecting a magnetic field of the position detection mechanism 17.

### (Linear-motion rotation operation)

When the output shaft 2 is rotated, power is supplied to the rotation drive coils 45 of the rotation drive unit 21 to rotate the rotor 41. When the rotor 41 is rotated, the rotation is transmitted to the output shaft 2 via the ball spline bearing 36. Therefore, the output shaft 2 rotates integrally with the rotor 41. Further, the position detection permanent magnet 81 rotates integrally with the output shaft 2. Accordingly, the rotational position of the output shaft 2 can be acquired on the basis of a detection signal from the rotational position detection magnetic sensor 82 which detects a change in magnetic field of the position detection permanent magnet 81.

On the other hand, when the output shaft 2 is moved in the axial direction X, power is supplied to the linear-motion drive coils 75 of the linear-motion drive unit 22. Then, the output shaft 2 that has moved in the axial direction X is maintained at the linearly moved position after the movement by maintaining the state of supplying power to the linear-motion drive coils 75. Figs. 7a, 7b and 7c are explanatory views of the stroke S (movement range) of the output shaft 2. Fig. 7a illustrates a state in which the output shaft 2 is positioned at the lower end position S0 of the stroke S in the reference posture. At the lower end position S0, an amount of the protrusion of the output shaft 2 protruding from the case 4 to the output-side is maximized. Fig. 7b illustrates a state in which the output shaft 2 is positioned at the central position C in the reference posture. Fig. 7c illustrates a state in which the output shaft 2 is positioned at the upper end position S1 of the stroke S in the reference posture. At the upper end position S1, the amount of the protrusion of the output shaft 2 protruding from the case 4 to the output-side is minimized. As illustrated in Figs. 7a, 7b and 7c, the position detection permanent magnet 81 linearly moves integrally with the output shaft 2. Therefore, the linear-motion position of the output shaft 2 can be acquired on the basis of a detection signal from the linear-motion position detection magnetic sensor 83 which detects a change in magnetic field of the position detection permanent magnet 81.

Here, when the power supply to the linear-motion rotation drive device 1 is stopped due to a power failure or the like, the linear-motion drive unit 22 cannot maintain the linear-motion position of the output shaft 2 in the axial direction X. Accordingly, in a case in which the linear-motion rotation drive device 1 has assumed the reference posture or the like, the output shaft 2 tries to move to the lower side X1 due to a weight thereof.

In such a case, the output shaft 2 is supported at the central position C of the stroke S thereof due to the coil spring 78. Therefore, for example, even when a power failure occurs in a case in which a driven member is attached to the output shaft 2, the driven member can be prevented from moving to the lower side X1 together with the output shaft 2. Accordingly, the driven member can be prevented from colliding against a member or the like positioned at the lower side X1 of the linear-motion rotation drive device 1 and breaking each other.

### (Manufacturing method of linear-motion rotation drive device)

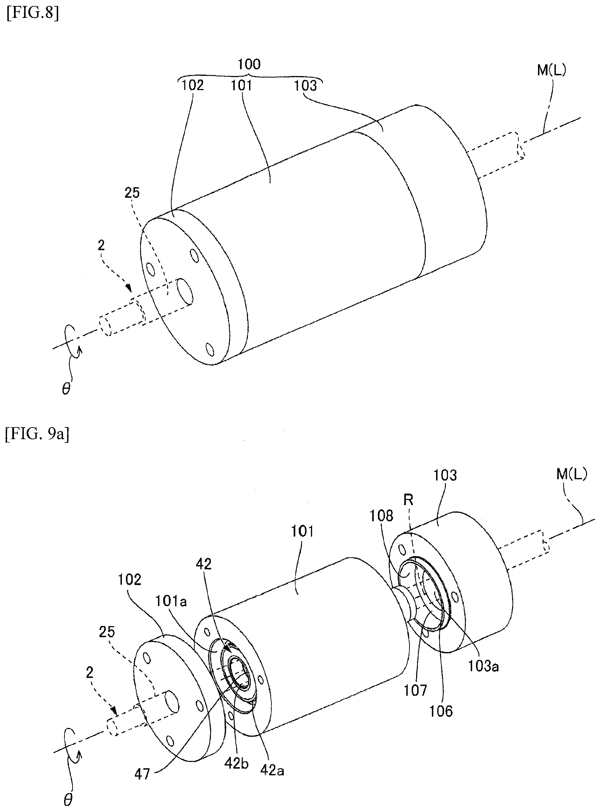

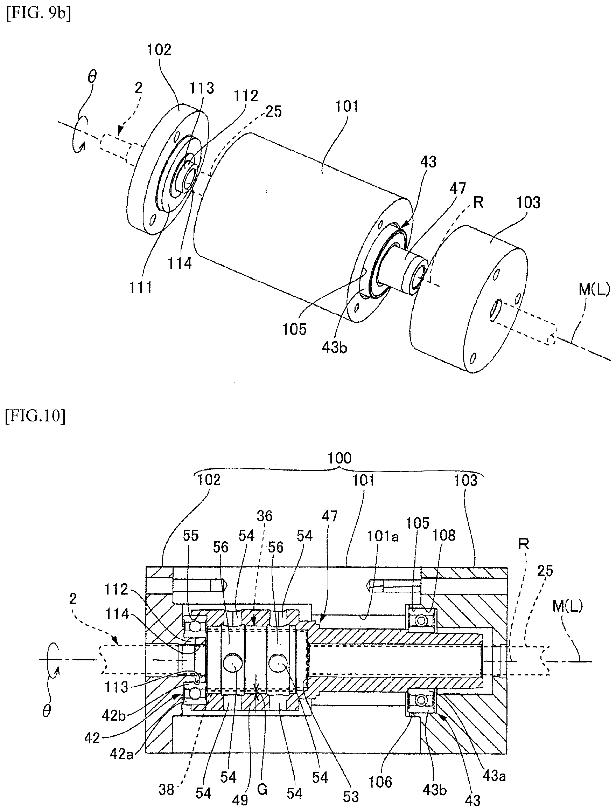

Next, a method of manufacturing the linear-motion rotation drive device 1 will be described with reference to Figs. 8 to 10. Fig. 8 is an external perspective view of a jig used in manufacturing the linear-motion rotation drive device 1. Fig. 9a is a perspective view of a state in which the jig is divided when viewed from one side in an axial direction of the jig, and Fig. 9b is a perspective view of a state in which the jig is divided when viewed from the other side in the axial direction of the jig. Fig. 10 is a cross-sectional view of a state in which the rotor 41 and the pair of bearings 42 and 43 of the rotation drive unit 21 are held by the jig. Further, in Figs. 8, 9a and 9b, the output shaft 2 is illustrated by a dotted line. Also, in Fig. 10, the output shaft 2 and the ball spline bearing 36 are illustrated by dotted lines.

The method of manufacturing the linear-motion rotation drive device 1 includes a holding step of attaching the ball spline bearing 36 to the output shaft body 25 and a fixing step of adhering and fixing the ball spline bearing 36 to the rotor 41 using a jig 100. With these holding step and fixing step, the axis L of the output shaft 2, a rotational center line R of the rotor 41, and a linear-motion direction of the output shaft 2 are made to coincide with each other.

In the holding step, the output shaft body 25 is held by the ball spline bearing 36. Here, when the output shaft body 25 is held by the ball spline bearing 36, the output shaft 2 and the ball spline bearing 36 are in a coaxial state. Further, when the output shaft body 25 is held by the ball spline bearing 36, the axis L of the output shaft 2 and the linear-motion direction of the output shaft 2 are coincident.

In the fixing step, first, the output shaft body 25 holding the ball spline bearing 36 is inserted into a center hole of the cylindrical member 47 of the rotor 41, and the ball spline bearing 36 is disposed on an inner circumferential side of the cylindrical member 47. Next, the sleeve 38 of the ball spline bearing 36 is brought into contact with the step portion 53 of the large-diameter cylindrical portion 49 of the cylindrical member 47. Then, an adhesive is interposed between the ball spline bearing 36 and the cylindrical member 47.

When an adhesive is interposed between the ball spline bearing 36 and the cylindrical member 47, the adhesive is injected from an outer circumferential side to the inner circumferential side of the cylindrical member 47 through each of the adhesive injection holes 54 (see Fig. 5) formed in the cylindrical member 47. Here, as illustrated in Fig. 10, two annular grooves 56 are formed on the inner circumferential surface of the large-diameter cylindrical portion 49 of the cylindrical member 47. Each of the two annular grooves 56 is provided to pass through four adhesive injection holes 54 arranged in the direction 0 around the axis L. Therefore, when an adhesive is injected to the inner circumferential side of the cylindrical member 47 through the respective adhesive injection holes 54, the adhesive moves along the annular grooves 56 between the ball spline bearing 36 and the cylindrical member 47. Further, the adhesive is not necessary to be filled until the gap G and the annular grooves 56 between the ball spline bearing 36 and the cylindrical member 47 are sealed, but need only be interposed at a plurality of positions in the direction θ around the axis L, for example, between the ball spline bearing 36 and the cylindrical member 47 around the adhesive injection holes 54.

Thereafter, before the adhesive is cured, the rotational center line R of the cylindrical member 47 (rotor 41) and the axis L of the output shaft 2 are made to coincide with each other using the jig 100. As illustrated in Fig. 8, the jig 100 includes a cylindrical first jig 101, a cylindrical second jig 102 stacked on one side of the first jig 101 in a direction of an axis M of the jig 100, and a cylindrical third jig 103 stacked on the other side of the first jig 101.

When the rotational center line of the cylindrical member 47 and the axis L of the output shaft 2 are made to coincide with each other, first, the cylindrical member 47 and the output shaft 2 are disposed inside a center hole 101a of the first jig 101. That is, the cylindrical member 47 and the output shaft 2 are in a state of passing through the center hole 101a of the first jig 101. Next, as illustrated in Fig. 9b, the second bearing 43 is attached to the small-diameter cylindrical portion 51 of the cylindrical member 47 from the other side of the first jig 101. Then, the third jig 103 is stacked on the first jig 101 from the other side of the first jig 101. Further, the center hole 101a of the first jig 101 has a formation of corresponding to the cylindrical member 47. Also, the center hole 101a of the first jig 101 is provided coaxially with the axis M of the jig 100.

Here, as illustrated in Fig. 9b, a circular recessed portion 105 is formed coaxially with the center hole 101a on an end surface of the first jig 101 on the third jig 103 side. An inner diameter dimension of the circular recessed portion 105 is longer than an outer diameter dimension of the second bearing 43 (an outer diameter dimension of the outer ring 43b). On the other hand, as illustrated in Fig. 9a, an annular protrusion 106 that can be fitted into the recessed portion of the first jig 101 is provided on an end surface of the third jig 103 on the first jig 101 side. In addition, a circular recessed portion 107 is provided inside the annular protrusion 106 coaxially with a center hole 103a of the third jig 103. An inner circumferential surface of the annular protrusion 106 and an inner circumferential surface of the circular recessed portion 107 are continuous without a stepped portion and constitute an annular third jig side positioning surface 108. The third jig side positioning surface 108 is coaxial with the axis M of the jig 100.

When the first jig 101 and the third jig 103 are stacked along the axis M of the jig 100, the annular protrusion 106 of the third jig 103 is inserted into the circular recessed portion 105 of the first jig 101. Thereby, the first jig 101 and the third jig 103 are stacked in a state of being positioned in a radial direction with respect to the axis M of the jig 100. When the first jig 101 and the third jig 103 are stacked, as illustrated in Fig. 10, the outer ring 43b of the second bearing 43 fixed to the cylindrical member 47 comes into contact with the third jig side positioning surface 108. As a result, the second bearing 43 is in a state in which positioning thereof has been made in the radial direction with respect to the axis M of the jig 100.

Thereafter, the first bearing 42 is mounted on the bearing mounting portion 55 of the cylindrical member 47 from one side of the first jig 101. Then, the second jig 102 is stacked on the first jig 101 from one side of the first jig 101.

Here, as illustrated in Fig. 9b, an annular large-diameter protrusion 111 is provided coaxially with the axis M of the jig 100 at a center of an end surface of the second jig 102 on the first jig 101 side. A small-diameter protrusion 112 is provided at a center of the large-diameter protrusion 111. The outer circumferential surface of the small-diameter protrusion 112 is a second jig side positioning surface 113 coaxial with the axis M of the jig 100. Also, an inner circumferential surface of the small-diameter protrusion 112 is an output shaft positioning surface 114 coaxial with the axis M of the jig 100.

When the first jig 101 and the second jig 102 are stacked along the axis M of the jig 100, the large-diameter protrusion 111 of the second jig 102 is inserted into the center hole 101a of the first jig 101. Thereby, the second jig 102 and the first jig 101 are coaxially connected to each other in a state of being positioned in the radial direction with respect to the axis M of the jig 100. Further, at this time, the small-diameter protrusion 112 of the second jig 102 is inserted into an inner circumferential side of the first bearing 42. Thereby, the inner ring 42b of the first bearing 42 fixed to the cylindrical member 47 comes into contact with the second jig side positioning surface 113. Therefore, the first bearing 42 is in a state in which positioning thereof has been made in the radial direction with respect to the axis M of the jig 100.

Further, when the second jig 102 is stacked on the first jig 101, the output shaft positioning surface 114 of the first jig 101 comes into contact with an outer circumferential surface of the output shaft 2 (the output shaft body 25). Therefore, the output shaft 2 is in a state in which positioning thereof has been made in the radial direction with respect to the axis M of the jig 100.

In a state in which the first jig 101, the second jig 102, and the third jig 103 are stacked and constitute one jig 100, the output shaft 2, the first bearing 42, and the second bearing 43 are positioned in the radial direction with respect to the axis M of the jig 100, and these are coaxially disposed. Here, a rotational center line of the first bearing 42 and a rotational center line of the second bearing 43 define the rotational center line of the cylindrical member 47 (rotor 41). Therefore, in a state in which the first jig 101, the second jig 102, and the third jig 103 are stacked and constitute one jig 100, the axis L of the output shaft 2 and the rotational center line of the cylindrical member 47 are coincident.

Also, the gap G is provided over the entire circumference in the direction θ around the axis between the ball spline bearing 36 and an inner circumferential surface of the cylindrical member 47. Therefore, when the first jig 101, the second jig 102, and the third jig 103 are stacked, the output shaft body 25 (the ball spline bearing 36) and the cylindrical member 47 are movable relative to each other in the radial direction of the axis M of the jig 100. Therefore, when the output shaft body 25, the cylindrical member 47, and the pair of bearings 42 and 43 are supported by the jig 100, the axis L of the output shaft body 25 and the rotational center line of the cylindrical member 47 can be coincident with each other while the output shaft body 25 (the ball spline bearing 36) and the cylindrical member 47 do not interfere with each other. Here, the output shaft body 25 is supported by the ball spline bearing 36 such that its axis L and the linear-motion direction are coincident with each other. Therefore, when the axis of the output shaft body 25 and the rotational center line of the cylindrical member 47 are made to coincide with each other by the fixing step, the axis L of the output shaft 2 (the output shaft body 25), a rotational center line of the rotor 41 (the cylindrical member 47), and the linear-motion direction of the output shaft 2 are coincident with each other.

Thereafter, the output shaft body 25, the cylindrical member 47, and the pair of bearings 42 are 43 are held by the jig 100 until the adhesive is cured. Thereby, the ball spline bearing 36 and the cylindrical member 47 are fixed with an adhesive to be rotatable integrally. Further, the fixing member 26 is fixed to the output shaft body 25 after the adhesive is cured. Alternatively, after the cylindrical member 47 and the output shaft body 25 are held inside the center hole 101a of the first jig 101, the cylindrical member 47 and the output shaft body 25 are fixed to the output shaft body 25.

After the first bearing 42 and the second bearing 43 are mounted on the cylindrical member 47 and the ball spline bearing 36 and the cylindrical member 47 are fixed, the permanent magnet 48 is fixed to the cylindrical member 47. Thereby, the rotor 41 is completed.

Thereafter, as illustrated in Fig. 4, the rotor 41 is fixed to the case 4 in a state in which the first bearing fitting portion 58 of the flange 7 is fitted to an inner circumferential side of the inner ring 42b of the first bearing 42, and the second bearing fitting portion 59 is fitted to an outer circumferential side of the outer ring 43b of the second bearing 43. That is, when the rotor 41 is held by the jig 100, the rotor 41 is fixed to the case 4 with reference to the inner ring 42b of the first bearing 42 abutting against the second jig side positioning surface 113 of the second jig 102, and the outer ring 43b of the second bearing 43 abutting against the third jig side positioning surface 108 of the third jig 103. Accordingly, the rotor 41 and the output shaft 2 are fixed to the case 4 in a state in which the axis L of the output shaft 2, the rotational center line of the rotor 41 (cylindrical member 47), and the linear-motion direction of the output shaft 2 are coincident with each other.

### (Operation and effects)

In the linear-motion rotation drive device 1 of this example, the axis L of the output shaft 2, the rotational center line of the rotor 41, and the linear-motion direction of the output shaft 2 are coincident with each other. Therefore, it is possible to prevent or inhibit the output shaft 2 from vibrating when the output shaft 2 is driven by the output shaft drive mechanism 3.

Also, in this example, the outer diameter dimension of the ball spline bearing 36 is shorter than an inner diameter dimension of the cylindrical member 47 constituting the rotor 41. Therefore, when the rotational center line of the cylindrical member 47 and the axis L of the output shaft 2 held by the ball spline bearing 36 are made to coincide with each other using the jig 100, the cylindrical member 47 and the output shaft 2 (ball spline bearing 36) can be moved relative to each other in the radial direction. Further, in this example, the gap G is formed between the ball spline bearing 36 and the cylindrical member 47 over the entire circumference in the direction θ around the axis L. That is, when the rotational center line R of the cylindrical member 47 and the axis L of the output shaft 2 held by the ball spline bearing 36 are made to coincide with each other using the jig 100, the ball spline bearing 36 and the cylindrical member 47 do not interfere with each other. Therefore, the rotational center line R of the cylindrical member 47 (rotor 41) and the axis L of the output shaft 2 can be accurately coincident with each other.

Further, in this example, the case 4 includes the opposite output-side opening 10 (case side bearing) which supports the output shaft 2 at a position away from the ball spline bearing 36 in the axial direction X. Therefore, the output shaft 2 can be prevented from vibrating when the output shaft 2 is driven.

Also, in this example, the ball spline bearing 36 is fixed to the rotor 41 with an adhesive. Therefore, it is easy to fix the ball spline bearing 36 and the rotor 41 (cylindrical member 47) in a state of including the radial gap G. Further, in this example, since the cylindrical member 47 has the adhesive injection holes 54, the adhesive can be injected between the ball spline bearing 36 and the cylindrical member 47 from the outer circumferential side of the cylindrical member 47 through the adhesive injection holes 54. Therefore, a fixing operation of fixing the ball spline bearing 36 and the rotor 41 (cylindrical member 47) becomes easier.

Further, in the method of manufacturing the linear-motion rotation drive device 1, first, the output shaft 2 is held coaxially with the ball spline bearing 36. Thereafter, the axis L of the output shaft 2 and the rotational center line R of the rotor 41 (cylindrical member 47) are made to coincide with each other, and in this state, the ball spline bearing 36 and the rotor 41 (cylindrical member 47) are fixed. Therefore, the axis L of the output shaft 2, the rotational center line of the output shaft L (the rotational center line R of the rotor 41), and the linear-motion direction of the output shaft 2 can be coincident with each other.

### (Other embodiments)

Further, the adhesive for fixing the ball spline bearing 36 and the cylindrical member 47 may be interposed over the entire circumference of the gap G between the ball spline bearing 36 and the cylindrical member 47. Also, the number and position of adhesive injection holes 54 provided in the cylindrical member 47 are not limited to those in the above-described example. Further, in the above-described example, although the ball spline bearing 36 and the cylindrical member 47 are fixed with an adhesive, the ball spline bearing 36 and the cylindrical member 47 can also be fixed using screws, tapes, or the like.

### [Reference Signs List]

1 Linear-motion rotation drive device
2 Output shaft
4 Case
10 Opposite output-side opening (case side bearing)
21 Rotation drive unit
22 Linear-motion drive unit
36 Ball spline bearing (output shaft bearing)
41 Rotor
42, 43 Bearing (Rotor bearing)
47 Cylindrical member
54 Adhesive injection hole
G Gap
L Axis
X Axis direction
θ Direction around axis

## Claims

1. A linear-motion rotation drive device comprising:
an output shaft;
a linear-motion drive unit which moves the output shaft in an axial direction;
a rotation drive unit which rotates the output shaft around an axis; and
an output shaft bearing coaxially supporting the output shaft to be movable in the axial direction and configured to transmit rotation of the rotation drive unit to the output shaft, wherein
the rotation drive unit is a rotary motor and includes:
an annular rotor of which an inner diameter dimension is larger than an outer diameter dimension of the output shaft bearing; and
a pair of rotor bearings holding the rotor to be rotatable around the axis at positions spaced apart in the axial direction,
the output shaft bearing is fixed to the rotor in a state in which there is a gap in a radial direction between the output shaft bearing and the rotor on an inner circumferential side of the rotor, and
the output shaft bearing and the rotor rotate integrally.

2. The linear-motion rotation drive device according to claim 1, wherein the output shaft bearing is fixed to the rotor by an adhesive interposed between the output shaft bearing and the rotor in the radial direction.

3. The linear-motion rotation drive device according to claim 2, wherein the rotor includes an adhesive injection hole penetrating in the radial direction.

4. The linear-motion rotation drive device according to claim 1, wherein the gap is formed between the output shaft bearing and the rotor over the entire circumference around the axis.

5. The linear-motion rotation drive device according to claim 1, wherein the pair of rotor bearings and the output shaft are coaxial.

6. The linear-motion rotation drive device according to claim 1, comprising:
a case which accommodates the linear-motion drive unit and the rotation drive unit, wherein
the linear-motion drive unit and the rotation drive unit are arranged in the axial direction, and
the case includes a case side bearing which supports the output shaft to be rotatable around the axis and movable in the axial direction on the linear-motion drive unit side opposite to the rotation drive unit in the axial direction.

7. A method of manufacturing the linear-motion rotation drive device according to claim 1, the method comprising:
a holding step of holding the output shaft coaxially with the output shaft bearing; and
a fixing step of fixing the output shaft bearing to a cylindrical member constituting the rotor, wherein, in the fixing step,
the output shaft is caused to penetrate through the cylindrical member so that the output shaft bearing is disposed on an inner circumferential side of the cylindrical member, and
the output shaft bearing is fixed to the cylindrical member with an adhesive by interposing the adhesive between the output shaft bearing and the cylindrical member and causing a rotational center line of the cylindrical member and an axis of the output shaft to coincide with each other.

8. The method of manufacturing a linear-motion rotation drive device according to claim 7, wherein, in the fixing step,
the pair of rotor bearings are mounted on the cylindrical member, and
the pair of rotor bearings and the output shaft are held by a jig so that a rotational center line of the pair of rotor bearings and an axis of the output shaft are made to coincide with each other.

9. The method of manufacturing a linear-motion rotation drive device according to claim 7, wherein
an adhesive injection hole penetrating in a radial direction is formed in the cylindrical member in advance, and,
when an adhesive is interposed between the output shaft bearing and the cylindrical member in the fixing step, the adhesive is injected to the inner circumferential side of the cylindrical member via the adhesive injection hole.
